# EUROPÄISCHE PATENTSCHRIFT

(11) **EP 0 854 164 B1**
(45) Veröffentlichungstag und Bekanntmachung des Hinweises auf die Patenterteilung: **19.04.2006**
(21) Anmeldenummer: 97122517.2
(22) Anmeldetag: 19.12.1997
(51) Int. Cl.: C08J 5/18, C08L 23/00

(54) **Verfahren zum Herstellen einer mikroporösen Polymer-Folie und mikroporöse Polymer-Folie**
Polymeric microporous films and a method for their making
Films microporeux polymérique et procédé pour leur fabrication

(30) Priorität: 16.01.1997 DE 19701244
(43) Veröffentlichungstag der Anmeldung: 22.07.1998
(73) Patentinhaber: ROYAL PACKAGING INDUSTRIES VAN LEER N.V., 1182 HL Amstelveen (NL)
(72) Erfinder: Groenewegen, A.K.J.M., P.O.Box 88, 2910 Essen (BE)
(74) Vertreter: Hutzelmann, Gerhard

(56) Entgegenhaltungen:
- EP-A- 0 352 802
- US-A- 4 829 096
- CHEMICAL ABSTRACTS, vol. 105, no. 10, 8.September 1986 Columbus, Ohio, US; abstract no. 80301, TSUCHIYA, HIROTAKA: "Multiporous plastic films" XP002061307 & JP 61 079 620 A (DAINIPPON PRINTING CO)

## Beschreibung

Die Erfindung betrifft ein Verfahren zum Herstellen einer mikroporösen Polymer-Folie aus einem Polymer oder Copolymer eines alpha-Olefins mit 2 bis 8 Kohlenstoffatomen, mit einem anorganischen Füllmittel wie z.B. Calzium Carbonat sowie einem Feuchtigkeitsgehalt der Schmelze niedriger als 700 ppm, wobei die extrudierte Folie bei einer Temperatur von 20 bis 160° um wenigstens das 1,5-fache gereckt wird, wobei eine Porosität nach Gurley von 0,1 bis 300 sek. erreicht wird und die Folie undurchlässig für Wasser bleibt, wobei zusätzlich 0,1 bis 5 % Calzium Oxid zugefügt werden, wobei der Anteil des Polymers bzw. Copolymers 20 bis 50 % und der des Calzium Carbonats 50 bis 75 % betragen, die Reckung ausschließlich in Längsrichtung zwischen dem 1,5 bis 5-fachen erfolgt und die Recktemperatur auf maximal 110°C beschränkt ist.

Aus der JP-A-61079620 ist ein derartiges Verfahren bekannt, bei dem ohne weitere Arbeitsgänge eine Feuchtigkeit der Schmelze von weniger als 700 ppm erzielt wird und dabei ohne Beeinträchtigung der Folie die gewünschte Porosität erreicht wird.

Desweiteren ist aus der EP-0 352 802 A2 ist ein ähnliches Verfahren bekannt, bei dem eine Vacuum-Trockung zum Erreichen einer niedrigen Feuchtigkeit durchgeführt wird.

Ausgehend hiervon liegt der Erfindung die Aufgabe zugrunde ein Verfahren aufzuzeigen, bei dem sehr effektiv eine Mikro-Porosität in der Folie hergestellt wird..

Diese Aufgabe wird erfindungsgemäß dadurch gelöst, daß zusätzlich ein oberflächenaktives Mittel in einer Konzentration von 0,1 bis 1 % beigegeben wird, wobei als oberflächenaktives Mittel beispielsweise Glyzerin als Mono- oder Distearat vorgesehen ist und daß die Folie im Extrusions-Blasverfahren hergestellt wird, anschließend flachgelegt und einer Reckstrecke zugeführt wird, in welcher die doppellagige Folie eine Längsreckung um das 1,5 bis 5-fache bei einer Temperatur zwischen 20 und 110°C unterzogen wird.

Damit wird das Recken der Folie verbessert und gleichzeitig sehr effektiv eine Mikro-Porosität in der Folie erzeugt.

Eine mikroporöse Polymer-Folie, die nach dem vorbeschriebenen Verfahren hergestellt wurde, ist dadurch gekennzeichnet, daß die Folie aus einem Gemisch aus 20 bis 50 % eines Polymers oder Copolymers eines alpha-Olefins mit 2 bis 8 Kohlenstoffatomen, 50 bis 75 % eines Calzium Carbonats sowie 0,1 bis 5 % eines Calzium Oxids besteht, im Extrusions-Blasverfahren hergestellt und anschließend bei einer Temperatur von 20 bis 110°C um das 1,5 bis 5-fache ausschließlich in Längsrichtung gereckt ist.

Eine derartige Folie hat eine sehr gute Durchlässigkeit für Luft und Wasserdampf, sie ist aber für den Durchtritt von Wasser dicht.

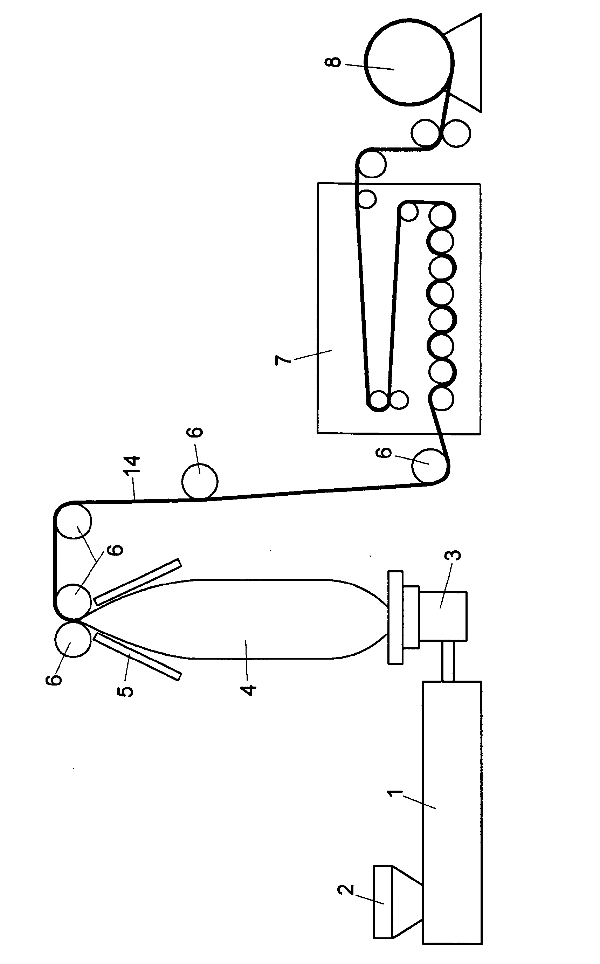

In der Zeichnung ist ein schematischer Ablauf eines Verfahrens dargestellt, mit dem eine mikroporöse Polymer-Folie hergestellt wird.

Mit 1 ist ein Extruder bezeichnet, der an seinem einen Ende mit einer Einfüllöffnung 2 versehen ist. Am anderen Ende des Extruders 1 ist ein Blaskopf 3 vorgesehen, aus dem eine schlauchförmige Kunststoffolie 4 extrudiert wird, wobei ins Innere des FolienSchlauches Luft eingeblasen wird. Oberhalb des Blaskopfes 3 sind Leiteinrichtungen 5 vorgesehen, mit deren Hilfe der Schlauch zu einer flachliegenden Folie 14 zusammengelegt wird. Diese flachliegende Folie 14 wird dann über mehrere Führungs- und Umlenkrollen 6 einer Reckvorrichtung 7 zugeführt. Im Anschluß an diese Reckvorrichtung ist noch eine Aufwickelvorrichtung 8 vorgesehen.

Dem Extruder 1 wird je nach Anforderung an die fertige Folie über die Einfüllöffnung 2 ein Gemisch aus 20 bis 50 % eines Polymers bzw. Copolymers eines alpha-Olefins mit 2 bis 8 Kohlenstoffatomen sowie 50 bis 75 % Calzium Carbonat zugeführt, wobei dieses Gemisch zusätzlich 0,1 bis 5 % Calzium Oxid sowie 0,1 bis 1 % Glyzerin enthält. Während der Bearbeitung im Extruder bindet das Calzium Oxid freies Wasser aus dem Gemisch, so daß dessen Anteil unter 700 ppm liegt. Im anschließenden Blasvorgang hat sich dieser geringe Anteil von freiem Wasser als sehr günstig erwiesen. Auf dem Weg vom Blaskopf 3 zu den Leiteinrichtungen 5 kühlt die Folie soweit ab, daß sie flach zusammengelegt werden kann, ohne daß ein Zusammenkleben zu befürchten ist. Die Folie wird dann in nicht dargestellter Weise weiter abgekühlt und kommt mit einer Temperatur von 20 bis 110°C in die Reckvorrichtung 7, wo sie um das 1,5 bis 5-fache in Längsrichtung gereckt wird. Durch weiteres Abkühlen unter Aufrechterhaltung der aufgebrachten Spannung wird noch innerhalb dieser Reckvorrichtung die erzeugte Reckung konserviert. Bei dieser Reckung entstehen in der Folie gleichmäßig verteilte mikroporöse Öffnungen, die eine sehr gute Atmungsaktivität der Folie ergeben. Gleichzeitig bleibt diese Folie aber gegen den Durchtritt von Wasser dicht. Die so hergestellte Folie wird dann in der Aufwickelvorrichtung 8 aufgewickelt.

## Patentansprüche

1. Verfahren zum Herstellen einer mikroporösen Polymer-Folie aus einem Polymer oder Copolymer eines alpha-Olefins mit 2 bis 8 Kohlenstoffatomen, mit einem anorganischen Füllmittel wie z.B. Calzium Carbonat sowie einem Feuchtigkeitsgehalt der Schmelze niedriger als 700 ppm, wobei die extrudierte Folie bei einer Temperatur von 20 bis 160° um wenigstens das 1,5-fache gereckt wird, wobei eine Porosität nach Gurley von 0,1 bis 300 sek. erreicht wird und die Folie undurchlässig für Wasser bleibt, wobei zusätzlich 0,1 bis 5 % Calzium Oxid zugefügt werden, wobei der Anteil des Polymers bzw. Copolymers 20 bis 50 % und der des Calzium Carbonats 50 bis 75 % betragen, die Reckung ausschließlich in Längsrichtung zwischen dem 1,5 bis 5-fachen erfolgt und die Recktemperatur auf maximal 110°C beschränkt ist, **dadurch gekennzeichnet, daß** zusätzlich ein oberflächenaktives Mittel in einer Konzentration von 0,1 bis 1 % beigegeben wird, wobei die Folie im Extrusions-Blasverfahren hergestellt wird, anschließend flachgelegt und einer Reckstrecke zugeführt wird, in welcher die doppellagige Folie einer Längsreckung um das 1,5 bis 5-fache bei einer Temperatur zwischen 20 und 110°C unterzogen wird.

2. Verfahren nach Anspruch 1, **dadurch gekennzeichnet, daß** als oberflächenaktives Mittel Glyzerin als Mono- oder Distearat vorgesehen ist.

## Claims

1. Process for the production of a microporous polymer film from a polymer or copolymer of an alpha olefin with 2 to 8 carbon atoms, with an inorganic filler such as calcium carbonate and a moisture content of the melt lower than 700 ppm, where the extruded film is oriented at least 1.5 times at a temperature of 20 to 160°, where Gurley porosity of 0.1 to 300 sec. is reached and the film remains impermeable to water, where 0.1 to 5% of calcium oxide is also added, where the proportion of the polymer or copolymer amounts to 20 to 50% and the proportion of the calcium carbonate amounts to 50 to 75%, the orientation is carried out exclusively in the longitudinal direction between 1.5 and 5 times and the orientation temperature is limited to a maximum of 110° C, **wherein** a surface-active agent is also added in a concentration of 0.1 to 1%, where the film is produced by the extrusion blowing process, is then collapsed and fed into an orientation section, in which the double-layer film is subjected to longitudinal orientation 1.5 to 5 times at a temperature of between 20 and 110° C.

2. Process according to claim 1, **wherein** glycerine as a mono- or distearate is provided as the surface-active agent.

## Revendications

1. Procédé de fabrication d'une feuille polymère micro-poreuse à partir d'un polymère ou d'un copolymère d'une alpha-oléfine comportant 2 à 8 atomes de carbone, avec un agent de charge inorganique, comme par exemple du carbonate de calcium, ainsi qu'une teneur en humidité de la masse fondue inférieure à 700 ppm, dans lequel la feuille extrudée est étirée au moins 1,5 fois à une température de 20 à 160 °C, une porosité selon Gurley de 0,1 à 300 secondes étant atteinte, et la feuille restant imperméable à l'eau, dans lequel on ajoute de plus 0,1 à 5 % d'oxyde de calcium, dans lequel la fraction du polymère ou du copolymère est comprise entre 20 et 50 % et celle du carbonate de calcium entre 50 et 75 %, l'étirement se faisant exclusivement dans la direction longitudinale entre 1,5 et 5 fois et la température d'étirement étant limitée au maximum à 110 °C, **caractérisé en ce que** l'on ajoute en outre un agent tensioactif à une concentration de 0,1 à 1 %, la feuille étant fabriquée par un procédé d'extrusion-soufflage, puis est placée à plat et amenée vers un banc d'étirage, dans lequel la feuille à double couche est soumise à un étirement longitudinal de 1,5 à 5 fois, à une température comprise entre 20 et 110 °C.

2. Procédé selon la revendication 1, **caractérisé en ce que** l'on prévoit en tant qu'agent tensioactif de la glycérine sous forme de mono- ou de distéarate.
